# EUROPEAN PATENT APPLICATION

(11) **EP 2 963 704 A1**
(43) Date of publication of application: **06.01.2016**
(21) Application number: 15174022.2
(22) Date of filing: 26.06.2015
(51) Int. Cl.: H01M 4/134, H01M 4/1395, H01M 4/38, H01M 10/052, H01M 10/0562, H01M 10/0585, H01M 10/44

(54) **SOLID STATE LITHIUM SECONDARY BATTERY AND METHOD FOR PRODUCING THE SAME**

(30) Priority: 30.06.2014 JP 2014134125
(71) Applicant: Toyota Jidosha Kabushiki Kaisha, Toyota-shi, Aichi-ken 471-8571 (JP)
(72) Inventor: OHTOMO, Takamasa, TOYOTA-SHI, AICHI-KEN, 471-8571 (JP); HOUJYOU, Yasutoshi, TOYOTA-SHI, AICHI-KEN, 471-8571 (JP); SAITO, Riyoko, TOYOTA-SHI, AICHI-KEN, 471-8571 (JP)
(74) Representative: Intès, Didier Gérard André

(57) **Abstract**

The present invention provides a solid state lithium secondary battery in which the occurrence of a short circuit at the time of charging is suppressed. This object is attained by providing a solid state lithium secondary battery comprising an anode current collector (1), a solid electrolyte layer (2), a cathode active material layer (3), and a cathode current collector (4) in this order, wherein the solid electrolyte layer (2) is provided on the surface of the anode current collector (1), the solid electrolyte layer contains sulfide solid electrolyte particles, the thickness of the solid electrolyte layer is 50 µm or less, the outer periphery of the anode current collector (1) is formed inwardly of the outer periphery of the solid electrolyte layer (2) when viewed in a planar view, and the distance between the outer periphery of the solid electrolyte layer (2) and the outer periphery of the anode current collector (1) is 300 µm or more.

## Description

### Technical Field

The present invention relates to a solid state lithium secondary battery in which the occurrence of a short circuit at the time of charging is suppressed.

### Background Art

Along with the rapid distribution of information-related equipment and communication equipment such as personal computers, video cameras and mobile telephones in recent years, development of batteries that are utilized as power supplies of the equipment is considered to be important. Furthermore, development of high output and high capacity batteries for electric vehicles or hybrid vehicles is in progress in automotive industries and the like as well. Currently, lithium batteries are attracting more attention among a variety of batteries, from the viewpoint of having high energy density.

In the lithium batteries that are currently available in the market, since liquid electrolytes containing flammable organic solvents are used, installation of a safety device for suppressing temperature increase at the time of a short circuit, or an apparatus intended for preventing a short circuit is needed. In this regard, it is speculated that since a lithium battery, obtained by converting a battery to an all solid state battery by replacing the liquid electrolyte with a solid electrolyte layer, does not use a flammable organic solvent in the battery, simplification of safety devices is promoted, and the lithium battery is excellent in terms of production cost and productivity.

Patent Literature 1 discloses a secondary battery in which a cathode and an anode are arranged with an electrolyte disposed therebetween, the battery being configured in a state that an active material layer is not formed on an anode current collector at the time of assembling, and having alkali metals and the like precipitated on the anode current collector during charging. This technology is intended for an enhancement of the battery capacity.

Furthermore, Patent Literature 2 discloses an organic solid electrolyte battery including lithium metal in the anode, in which the area of the anode is smaller than the area of the cathode. This technology is intended to provide a highly safe organic solid electrolyte battery having no lithium remaining even at the end of discharge. Furthermore, Patent Literature 3 discloses a non-aqueous electrolyte battery including a sulfide-based solid electrolyte material layer, in which an intermediate layer that suppresses mutual diffusion is included between a cathode and a solid electrolyte layer, and an anode layer is smaller than the cathode layer and the solid electrolyte layer and is larger than the intermediate layer. This technology is intended to enhance the charge-discharge cycle characteristics.

### Citation List

### Patent Literature

Patent Literature 1: Japanese Patent Application Publication (JP-A) No. 2011-159596
Patent Literature 2: JP-A NO. H07-312226
Patent Literature 3: JP-A NO. 2011-044368

### Summary of Invention

### Technical Problem

A solid state lithium secondary battery in which an anode active material layer is not provided at the time of assembling, and lithium (Li) metal as an anode active material is precipitated by subsequent charging, has an inherent problem that short circuits caused by dendrites are prone to occur, compared with a solid state lithium secondary battery provided with an anode active material layer at the time of assembling. When a solid state lithium secondary battery provided with an anode active material layer at the time of assembling is charged, Li is inserted into the interior of the anode active material (for example, carbon), and therefore, usually Li precipitation does not instantly occur at the surface of the anode active material. In contrast, in a case where an anode active material layer is not provided at the time of assembling, Li precipitation occurs on the surface of the anode current collector at the time of charging, and therefore, short circuits caused by dendrites are likely to occur.

Furthermore, a solid state lithium secondary battery having a solid electrolyte layer containing sulfide solid electrolyte particles (pressed powder type solid electrolyte layer) has an intrinsic problem that short circuits caused by dendrites are prone to occur, compared with a solid state lithium secondary battery having, for example, a thin film type solid electrolyte layer formed by a vapor deposition method or the like. Since it is difficult to impart, to a pressed powder type solid electrolyte layer, a denseness equal to that of a thin film type solid electrolyte layer, short circuits caused by dendrites are highly prone to occur in such circumstances. Particularly, when the thickness of the pressed powder type solid electrolyte layer is made smaller, short circuits occur more conspicuously.

The present invention has been made under such circumstances, and it is a main object of the invention to provide a solid state lithium secondary battery in which the occurrence of a short circuit at the time of charging is suppressed.

### Solution to Problem

In order to achieve the object described above, the inventors of the present invention conducted thorough investigations, and as a result, the inventors found that when the thickness of the pressed powder type solid electrolyte layer is small, the outer periphery of the solid electrolyte layer is in a circumstance that dendrites are particularly prone to occur. Therefore, the inventors found that when the distance from the outer periphery of the solid electrolyte layer to the outer periphery of an anode current collector is increased, the occurrence of a short circuit at the time of charging can be suppressed, and thus the inventors completed the invention.

That is, according to an aspect of the present invention, there is provided a solid state lithium secondary battery comprising an anode current collector, a solid electrolyte layer, a cathode active material layer and a cathode current collector in this order, wherein the solid electrolyte layer is provided on a surface of the anode current collector, the solid electrolyte layer contains a sulfide solid electrolyte particle, a thickness of the solid electrolyte layer is 50 µm or less, an outer periphery of the anode current collector is formed inwardly of an outer periphery of the solid electrolyte layer when viewed in a planar view, and a distance between the outer periphery of the solid electrolyte layer and the outer periphery of the anode current collector is 300 µm or more.

According to the aspect of the invention, since the outer periphery of the anode current collector is formed inwardly of the outer periphery of the solid electrolyte layer, and the distance between the two is larger than or equal to a predetermined value, a solid state lithium secondary battery in which the occurrence of a short circuit at the time of charging is suppressed, can be obtained.

Furthermore, according to another aspect of the invention, there is provided a solid state lithium secondary battery comprising an anode current collector, a solid electrolyte layer, a cathode active material layer, and a cathode current collector in this order, wherein the solid state lithium secondary battery comprises an anode active material layer composed of precipitated Li metal on a surface on the solid electrolyte layer side of the anode current collector, the solid electrolyte layer contains a sulfide solid electrolyte particle, a thickness of the solid electrolyte layer is 50 µm or less, an outer periphery of the anode current collector is formed inwardly of an outer periphery of the solid electrolyte layer when viewed in a planar view, and a distance between the outer periphery of the solid electrolyte layer and the outer periphery of the anode current collector is 300 µm or more.

According to the aspect of the invention, since the outer periphery of the anode current collector is formed inwardly of the outer periphery of the solid electrolyte layer, and the distance between the two is larger than or equal to a predetermined value, a solid state lithium secondary battery in which the occurrence of a short circuit at the time of charging is suppressed, can be obtained.

In regard to the invention described above, it is preferable that the distance between the outer periphery of the solid electrolyte layer and the outer periphery of the anode current collector be 640 µm or more.

Furthermore, according to another aspect of the invention, there is provided a method for producing a solid state lithium secondary battery, comprising steps of: a preparation step of preparing a laminate including an anode current collector, a solid electrolyte layer, a cathode active material layer and a cathode current collector in this order; and a charging step of subjecting the laminate to a charging treatment, wherein in the preparation step, at least the solid electrolyte layer is formed by a pressurization treatment, in the charging step, an anode active material layer composed of precipitated Li metal is formed on a surface on the solid electrolyte layer side of the anode current collector by causing Li contained in the cathode active material layer to migrate toward the anode current collector side, the solid electrolyte layer contains a sulfide solid electrolyte particle, a thickness of the solid electrolyte layer is 50 µm or less, when viewed in a planar view, an outer periphery of the anode current collector is formed inwardly of an outer periphery of the solid electrolyte layer, and a distance between the outer periphery of the solid electrolyte layer and the outer periphery of the anode current collector is 300 µm or more.

According to the aspect of the invention, since the outer periphery of the anode current collector is formed inwardly of the outer periphery of the solid electrolyte layer, and the distance between the two is larger than or equal to a predetermined value, a solid state lithium secondary battery in which the occurrence of a short circuit at the time of charging is suppressed, can be obtained.

### Advantageous Effects of Invention

The solid state lithium secondary battery of the invention gives an effect that the occurrence of a short circuit at the time of charging can be suppressed.

### Brief Description of Drawings

FIGS. 1A and 1B are schematic diagrams illustrating an example of the solid state lithium secondary battery of the invention.
FIGS. 2A and 2B are outline cross-sectional diagrams explaining the mechanism of a short circuit.
FIGS. 3A to 3C are outline cross-sectional diagrams illustrating a solid state lithium secondary battery of the invention.
FIGS. 4A to 4C are outline cross-sectional diagrams illustrating a solid state lithium secondary battery of the invention.
FIG. 5 is an outline cross-sectional diagram illustrating an example of the solid state lithium secondary battery of the invention.
FIGS. 6A to 6C are outline cross-sectional diagrams illustrating an example of the method for producing a solid state lithium secondary battery of the invention.
FIG. 7 is a diagram illustrating the results of charge-discharge measurement for the battery for evaluation obtained in Example 1.
FIG. 8 is a diagram illustrating the results of charge-discharge measurement for the battery for evaluation obtained in Comparative Example 1.
FIG. 9 is a diagram illustrating the results of charge-discharge measurement for the battery for evaluation obtained in Comparative Example 2.
FIG. 10 shows the coulombic efficiency of the batteries for evaluation each obtained in Example 1 and Comparative Examples 1 and 2.
FIG. 11 is a scanning electron microscopic (SEM) image obtained when the battery for evaluation obtained in Comparative Example 1 was disassembled.

### Description of Embodiments

Hereinafter, the solid state lithium secondary battery of the invention and the method for producing a solid state lithium secondary battery will be described in detail.

### A. Solid state lithium secondary battery

First, the solid state lithium secondary battery of the invention can be roughly divided into two embodiments. Hereinafter, the solid state lithium secondary battery is explained separately as a first embodiment and a second embodiment.

### 1. First embodiment

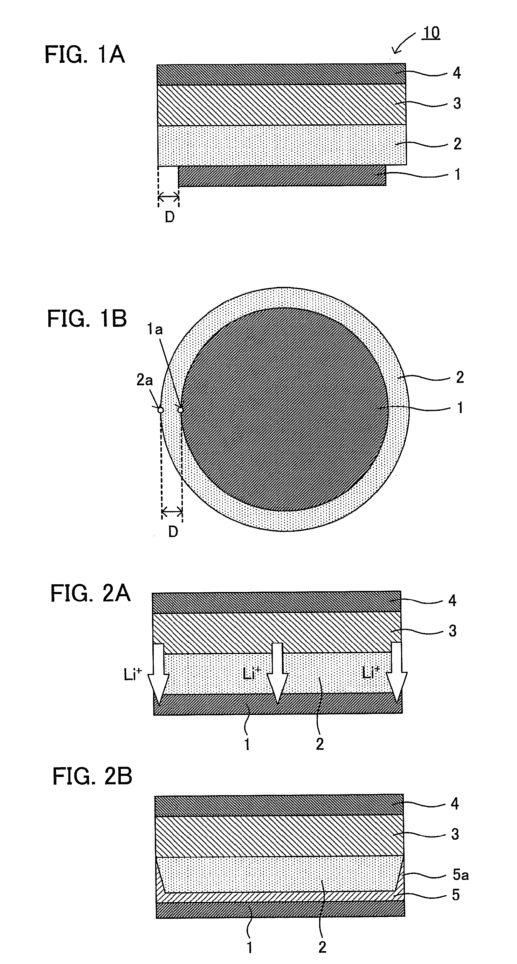

FIGS. 1A and 1B are schematic diagrams illustrating an example of the solid state lithium secondary battery of the first embodiment. Specifically, FIG. 1A is an outline cross-sectional diagram of a solid state lithium secondary battery, and FIG. 1B is an outline plan view diagram viewing the solid state lithium secondary battery from the anode current collector side.

As illustrated in FIG. 1A, the solid state lithium secondary battery 10 of the first embodiment comprises an anode current collector 1, a solid electrolyte layer 2, a cathode active material layer 3, and a cathode current collector 4 in this order. The solid electrolyte layer 2 is disposed on the surface of the anode current collector 1, and the two are in contact. The solid electrolyte layer 2 contains sulfide solid electrolyte particles (not shown in the diagram), and the thickness of the solid electrolyte layer 2 is 50 µm or less. Furthermore, as illustrated in FIG. 1B, the outer periphery of the anode current collector 1 is formed inwardly of the outer periphery of the solid electrolyte layer 2 when viewed in a planar view. The solid state lithium secondary battery is designed such that the distance D between the outer periphery of the anode current collector 1 and the outer periphery of the solid electrolyte layer 2 is larger than or equal to a predetermined value.

Here, regarding the distance D, as illustrated in FIG. 1B, when a point on the outer periphery of the solid electrolyte layer 2 is defined as an outer peripheral section 2a, the distance D means the distance from the outer peripheral section 2a to a point in the shortest distance on the outer periphery of the anode current collector 1 (outer peripheral section 1a). Furthermore, according to the first embodiment, it is preferable that the distance D be larger than or equal to a predetermined value in the substantially entire region of the solid electrolyte layer 2. The substantially entire region means 80% or more of the entire outer periphery of the solid electrolyte layer 2, and the substantially entire region is preferably 90% or more, and more preferably 95% or more. Furthermore, it is also desirable that in the entire outer periphery of the solid electrolyte layer 2, the distance D be larger than or equal to a predetermined value. Incidentally, since dendrites are generated at any site of the outer periphery of the solid electrolyte layer 2, if the distance D is larger than or equal to a predetermined value in 80% or more of the entire outer periphery of the solid electrolyte layer 2, the occurrence of dendrites can be suppressed at a high probability.

According to the first embodiment, since the outer periphery of the anode current collector is formed inwardly of the outer periphery of the solid electrolyte layer, and the distance between the two is larger than or equal to a predetermined value, a solid state lithium secondary battery in which the occurrence of a short circuit at the time of charging is suppressed, can be obtained. Furthermore, as described above, in the first embodiment, in a case where the thickness of the solid electrolyte layer is small, the outer periphery of the solid electrolyte layer is in a circumstance that particularly dendrites are likely to be generated. The reason for this is speculated to be as follows.

That is, it is speculated that when a solid electrolyte layer is formed by pressure molding sulfide solid electrolyte particles, voids are likely to remain in the outer periphery of the solid electrolyte layer by pressurization and depressurization during molding. Specifically, sulfide solid electrolyte particles are added to a molding tool (mold), and molding is carried out by pressing the electrolyte particles with a piston and the like. However, when the sulfide solid electrolyte particles are pressed by pressing, force works from the central section toward the outer peripheral section, and the outer peripheral section of the solid electrolyte layer is in a dense state. Thereafter, when the pressure is removed, the sulfide solid electrolyte particles of the outer peripheral section undergo elastic deformation, and the outer peripheral section of the solid electrolyte layer turns from a dense state to a non-dense state. It is speculated that thereby voids remain in the outer peripheral section, dendrites can easily grow in the cathode direction, and a short circuit occurs.

FIGS. 2A and 2B are outline cross-sectional diagrams explaining the mechanism of a short circuit. As illustrated in FIG. 2A, Li contained in the cathode active material layer 3 migrates toward the anode current collector 1 at the time of charging. Subsequently, as illustrated in FIG. 2B, as charging proceeds, an anode active material layer 5, which is precipitated Li metal, is formed on the surface on the side of the solid electrolyte layer 2 of the anode current collector 1. On the other hand, as described above, when the thickness of the solid electrolyte layer 2 is small, dendrites 5a are likely to be generated in the outer periphery of the solid electrolyte layer 2, and a short circuit is prone to occur. In contrast, according to the first embodiment, as illustrated in FIG. 1A, since the outer periphery of the anode current collector 1 is formed inwardly of the outer periphery of the solid electrolyte layer 2, dendrites that penetrate through the outer periphery of the solid electrolyte layer 2 cannot be easily formed. As a result, the occurrence of a short circuit can be suppressed.

Furthermore, the solid state lithium secondary battery of the first embodiment does not have an anode active material (Li metal) in the stage before charging (upon battery assembling), and causes precipitation and self-formation of an anode active material (Li metal) using the Li contained in the cathode active material layer at the time of charging. Therefore, it is advantageous in terms of volume and weight as compared with the case where an anode active material layer has been prepared in advance, and an increase in the energy density of the battery can be promoted. Furthermore, since the amount of Li metal used in the battery can be minimized, reactions derived from Li metal occur to a relatively reduced extent.

Hereinafter, the configuration of the solid state lithium secondary battery of the first embodiment is explained.

### (1) Solid electrolyte layer

The solid electrolyte layer contains sulfide solid electrolyte particles. A solid electrolyte layer can be obtained by pressurizing sulfide solid electrolyte particles (powder pressing). Furthermore, the thickness of the solid electrolyte layer is usually 50 µm or less, preferably 30 µm or less, and more preferably 20 µm or less. On the other hand, the thickness of the solid electrolyte layer is, for example, 1 µm or more, and preferably 10 µm or more. Incidentally, the thickness of the solid electrolyte layer refers to the average thickness of the solid electrolyte layer.

Examples of the sulfide solid electrolyte particles include particles of Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (provided that m and n represent positive numbers; and Z represents any of Ge, Zn and Ga), Li₂S-GeS₂, Li₂S-SiS₂-Li₃PO₄, Li₂S-SiS₂-LiₓMO_{y} (provided that x and y represent positive numbers; and M represents any of P, Si, Ge, B, Al, Ga and In), and Li₁₀GeP₂S₁₂. The sulfide solid electrolyte particles may be amorphous or may be crystalline, or may be made of a glass ceramic. Furthermore, since Li metal is used as the anode active material, it is preferable that the sulfide solid electrolyte particles do not contain metal elements such as Ge and Si. It is because the reduction-resistance is enhanced.

It is preferable that the sulfide solid electrolyte particles have an ion conductor containing the Li element, P element and sulfur (S) element. The ion conductor is usually configured to have a Li cation and an anion structure containing P and S. In that structure, it is preferable that the ion conductor contains a PS₄³⁻ structure as a main body (50 mol% or more) of the anion structure. Among others, the proportion of the PS₄³⁻ structure is preferably 60 mol% or more, more preferably 70 mol% or more, even more preferably 80 mol% or more, and particularly preferably 90 mol% or more, with respect to the entire anion structure of the ion conductor. Incidentally, the proportion of the PS₄³⁻ structure can be determined by Raman spectroscopy, NMR, XPS, or the like.

Furthermore, the sulfide solid electrolyte particles contain the ion conductor as a main component. The proportion of the ion conductor in the sulfide solid electrolyte particles is preferably 65 mol% or more, more preferably 70 mol% or more, and even more preferably 75 mol% or more. Furthermore, the sulfide solid electrolyte particles may be composed only of the ion conductor, or may contain other components. Examples of the other components include LiI.

The proportion of LiI is, for example, 5 mol% or more, preferably 10 mol% or more, and more preferably 20 mol% or more. On the other hand, the proportion of LiI is, for example, 35 mol% or less, and preferably 30 mol% or less. Particularly, it is preferable that the sulfide solid electrolyte particles have a composition of xLiI·(100 - x)(yLi₂S·(1- y)P₂S₅) (20 ≤ x ≤ 30 and 0.7 ≤ y ≤ 0.8). Incidentally, "y" is preferably 0.72 or more, and more preferably 0.74 or more. Furthermore, "y" is preferably 0.78 or less, and more preferably 0.76 or less.

Furthermore, it is preferable that the sulfide solid electrolyte particles substantially do not contain Li₂S. It is because the amount of hydrogen sulfide generation can be reduced. When Li₂S reacts with water, hydrogen sulfide is generated. For example, if the proportion of Li₂S contained in the raw material composition is large, Li₂S is likely to remain. The fact that " (the particles) substantially do not contain Li₂S" can be confirmed by X-ray diffraction. Specifically, in a case where the sulfide solid electrolyte particles do not have the peaks of Li₂S (2θ = 27.0°, 31.2°, 44.8°, and 53.1°), it can be concluded that the particles substantially do not contain Li₂S.

Furthermore, it is preferable that the sulfide solid electrolyte particles substantially do not contain cross-linking sulfur. It is because the amount of hydrogen sulfide generation can be reduced. "Cross-linking sulfur" refers to cross-linking sulfur in a compound formed as a result of a reaction between Li₂S and a sulfide of P. An example thereof is a cross-linking sulfur having a S₃P-S-PS₃ structure formed as a result of a reaction between Li₂S and P₂S₅. Such cross-linking sulfur can easily react with water, and hydrogen sulfide is likely to be generated. Furthermore, the fact that "(the particles) substantially do not contain cross-linking sulfur" can be confirmed by an analysis of the Raman spectroscopic spectrum. For example, the peak of the S₃P-S-PS₃ structure usually appears at 402 cm⁻¹. Therefore, it is preferable that this peak be not detected. Also, the peak of the PS₄³⁻ structure usually appears at 417 cm⁻¹. It is preferable that the intensity at 402 cm⁻¹, I₄₀₂, be smaller than the intensity at 417 cm⁻¹, I₄₁₇. More specifically, the intensity I₄₀₂ is preferably, for example, 70% or less, more preferably 50% or less, and even more preferably 35% or less, relative to the intensity I₄₁₇.

Furthermore, the sulfide solid electrolyte particles may be particles formed by amorphizing a raw material composition containing Li₂S, a sulfide of P (phosphorus), and LiI (sulfide glass), or may be a product obtained by further crystallizing the resultant (glass ceramic). It is preferable that Li₂S has a less amount of impurities. It is because side reactions can be suppressed. On the other hand, examples of the sulfide of P (phosphorus) include P₂S₃ and P₂S₅. Incidentally, simple substance P and simple substance S may also be used instead of the sulfide of P (phosphorus). Furthermore, examples of the method for amorphization include a mechanical milling method and a melt quenching method. Examples of mechanical milling include ball milling, vibration milling, turbo milling, mechanofusion, and disc milling. Also, mechanical milling may be carried out in a dry mode or in a wet mode; however, the latter is preferred. It is because highly uniform sulfide solid electrolyte particles can be obtained. Examples of a method for crystallization include a method of heating to a temperature higher than or equal to the crystallization temperature.

In a case where the raw material composition contains Li₂S and P₂S₅, the ratio for obtaining a stoichiometric ortho-composition is such that Li₂S : P₂S₅ = 75 : 25 on a molar basis. Here, the term ortho denotes the most highly hydrated oxoacid among the oxoacids that are obtained by hydrating an identical oxide. A crystal composition in which most Li₂S has been added to a sulfide is called an ortho-composition. For example, in a Li₂S-P₂S₅ system, Li₃PS₄ corresponds to the ortho-composition. When the raw material composition Li₂S and P₂S₅, the proportion of Li₂S relative to the sum of Li₂S and P₂S₅ is preferably in the range of 70 mol% to 80 mol%, more preferably 72 mol% to 78 mol%, and even more preferably in the range of 74 mol% to 76 mol%.

The average particle size (D₅₀) of the sulfide solid electrolyte particles is, for example, 0.01 µm or more, and is preferably 0.1 µm or more. On the other hand, the average particle size (D₅₀) of the sulfide solid electrolyte particles is, for example, 50 µm or less, and is preferably 30 µm or less. Furthermore, it is preferable that the sulfide solid electrolyte particles have high Li ion conductivity, and the Li ion conductivity at normal temperature (25°C) is preferably, for example, 1 × 10⁻⁴ S/cm or more, and more preferably 1 x 10⁻³ S/cm or more.

The solid electrolyte layer may be composed only of the sulfide solid electrolyte particles, and may also contain other components. Examples of the other components include a binder that will be described below. The proportion of the sulfide solid electrolyte particles included in the solid electrolyte layer is, for example, 50% by volume or more, and is preferably 60% by volume or more, more preferably 70% by volume or more, even more preferably 80% by volume or more, and particularly preferably 90% by volume or more.

The shape in a planar view of the solid electrolyte layer is not particularly limited, but examples thereof include a circular shape, an elliptical shape, a rectangular shape, and an arbitrary polygonal shape.

The average pore radius of the solid electrolyte layer that can be determined by a mercury penetration method is, for example, 0.0057 µm or less, and is preferably 0.0054 µm or less, and more preferably 0.0051 µm or less. The average pore radius of the solid electrolyte layer is determined by a mercury penetration method. Specifically, as will be described in the following Examples, the average pore radius can be determined from a pore distribution curve using a pore distribution analyzer. It is speculated that the average pore radius of the central region (region inner than a depth of 250 µm or more from the outer periphery) of the solid electrolyte layer is larger than the average pore radius of the outer peripheral region (region extending to a depth of 250 µm in the interior from the outer periphery) of the solid electrolyte layer.

The packing ratio of the solid electrolyte layer is, for example, 89% or more, and is preferably 90% or more, more preferably 92% or more, and even more preferably 94% or more. The packing ratio of the solid electrolyte layer can be calculated from a comparison between the true density determined by the Archimedean method and the apparent density calculated from the thickness and weight of a pellet. The packing ratio of the central region (region inner than a depth of 250 µm or more from the outer periphery) of the solid electrolyte layer is suspected to be higher than the packing ratio of the outer peripheral region (region extending to a depth of 250 µm from the outer periphery) of the solid electrolyte layer).

### (2) Anode current collector

According to the first embodiment, the anode current collector is disposed to be in contact with the solid electrolyte layer. Furthermore, when viewed in a planar view, the outer periphery of the anode current collector is formed inwardly of the outer periphery of the solid electrolyte layer. Also, when viewed in a planar view, it is preferable that the outer periphery of the anode current collector do not exceed the outer periphery of the solid electrolyte layer. That is, when viewed in a planar view, it is preferable that the outer periphery of the anode current collector be included in the outer periphery of the solid electrolyte layer. Furthermore, the distance D between the outer periphery of the anode current collector and the outer periphery of the solid electrolyte layer is usually 300 µm or more, and is preferably 640 µm or more. It is because the occurrence of short circuits can be further suppressed. On the other hand, the distance D is, for example, 1000 µm or less, and is preferably 800 µm or less. It is because if the distance D is too large, there is a possibility that the current collection efficiency may be decreased while the effect of suppressing a short circuit caused by dendrites, which occurs in the outer periphery of the solid electrolyte layer, does not change.

The material of the anode current collector is preferably a material which does not form an alloy with Li, and examples thereof include SUS, copper, nickel, and carbon. Examples of the form of the anode current collector include a foil form, a sheet form, and a mesh form. The shape in a planar view of the anode current collector is not particularly limited, but examples thereof include a circular shape, an elliptical shape, a rectangular shape, and an arbitrary polygonal shape. Furthermore, the shape in a planar view of the anode current collector may be a shape similar to the shape in a planar view of the solid electrolyte layer. Also, the thickness of the anode current collector may vary with the shape; however, the thickness is, for example, in the range of 1 µm to 50 µm, and preferably in the range of 5 µm to 20 µm.

### (3) Cathode active material layer

The cathode active material layer is a layer containing at least a cathode active material, and if necessary, the cathode active material layer may contain at least one of a solid electrolyte material, a conductive material, and a binder. The cathode active material usually contains Li. Examples of the cathode active material include oxide active materials, and specific examples thereof include layered rock salt bed type active materials such as LiCoO₂, LiMnO₂, LiNiO₂, LiVO₂, and LiNi_{1/3}Co_{1/3}Mn_{1/3}O₂; spinel type active materials such as LiMn₂O₄ and Li(Ni_{0.5}Mn_{1.5})O₄; and olivine type active materials such as LiFePO₄ LiMnPO₄ LiNiPO₄, and LiCuPO₄. Si-containing oxides such as Li₂FeSiO₄ and Li₂MnSiO₄ may also be used as cathode active materials. The average particle size (D₅₀) of the cathode active material is preferably, for example, in the range of 1 µm to 50 µm, more preferably in the range of 1 µm to 20 µm, and even more preferably in the range of 1 µm to 10 µm.

Furthermore, the surface of the cathode active material may be coated with a coating layer. It is because a reaction between the cathode active material and a solid electrolyte material can be suppressed. Examples of the material of the coating layer include Li ion-conductive oxides such as LiNbO₃, Li₃PO₄, and LiPON. The average thickness of the coating layer is preferably, for example, in the range of 1 nm to 20 nm, and more preferably in the range of 1 nm to 10 nm.

The cathode active material layer may further contain a solid electrolyte material. The kind of the solid electrolyte material is not particularly limited, but examples thereof include sulfide solid electrolyte materials. Regarding the sulfide solid electrolyte material, the same material as that of the sulfide solid electrolyte particles described above can be used.

The cathode active material layer may further contain a conductive material. When a conductive material is added, electrical conductivity of the cathode active material layer can be enhanced. Examples of the conductive material include acetylene black, Ketjen black, and carbon fibers. Furthermore, the cathode active material layer may contain a binder. Examples of the kind of the binder include fluorine-containing binders such as polyvinylidene fluoride (PVDF). Furthermore, the thickness of the cathode active material layer is preferably, for example, in the range of 0.1 µm to 1000 µm.

### (4) Other configurations

The solid state lithium secondary battery usually has a cathode current collector that collects the electric current of the cathode active material layer. Examples of the material of the cathode current collector include SUS, aluminum, nickel, iron, titanium, and carbon. In regard to the thickness, shape and the like of the cathode current collector, it is preferable to appropriately select the properties in accordance with factors such as the use of the battery. Furthermore, regarding the battery case, a battery case for general batteries can be used. Examples of the battery case include a battery case made of SUS.

### (5) Solid state lithium secondary battery

The solid state lithium secondary battery of the first embodiment is not particularly limited as long as the battery has a solid electrolyte layer, an anode current collector, a cathode active material layer, and a cathode current collector. Furthermore, the solid state lithium secondary battery of the first embodiment is in a state on the occasion before charging or after complete discharge.

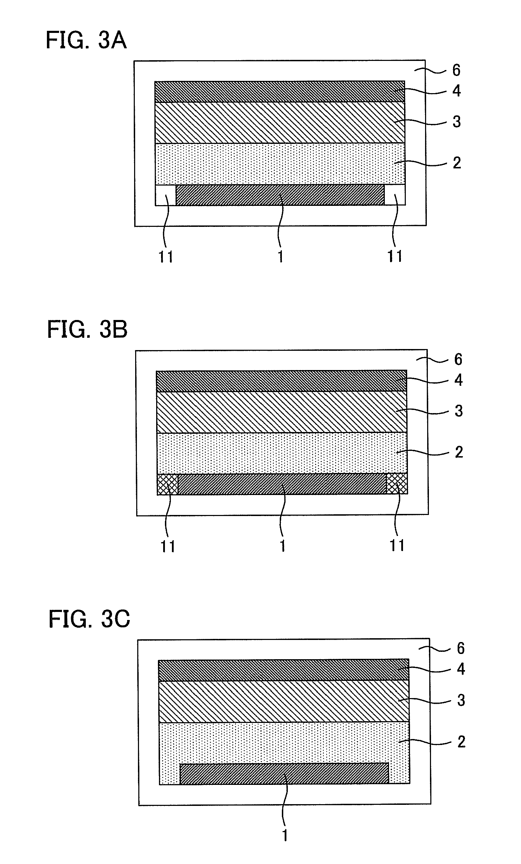

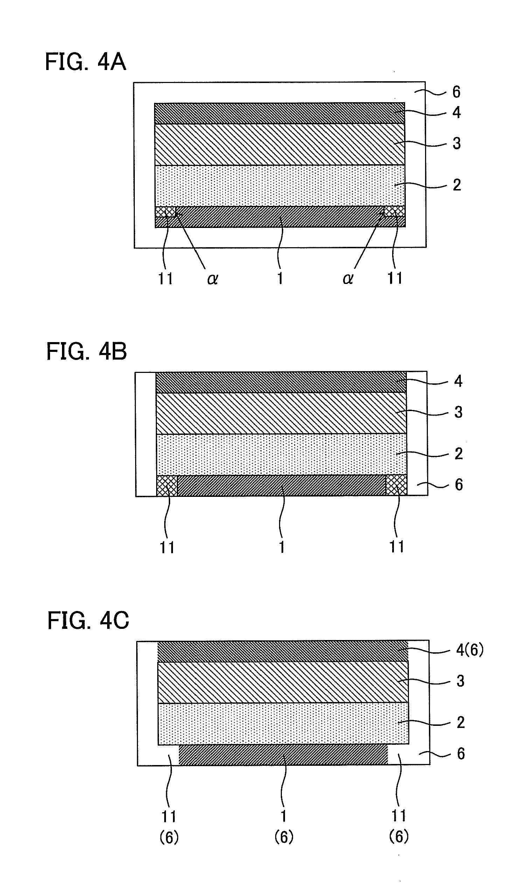

FIGS. 3A to 3C and FIGS. 4A to 4C are outline cross-sectional diagrams illustrating the solid state lithium secondary battery of the first embodiment. Incidentally, the battery case 6 in FIGS. 3A to 3C and FIGS. 4A to 4C is intended to have been appropriately subjected to an insulating treatment so as to prevent short circuits. Furthermore, in FIGS. 3A to 3C and FIGS. 4A to 4C, terminals are not particularly shown in the diagram, but electricity may be extracted by any arbitrary method.

In FIG. 3A, a short circuit preventing region 11 configured to include an inert gas is provided around the anode current collector 1. In FIG. 3B, a short circuit preventing region 11 constructed from an insulating material different from the solid electrolyte layer 2 is provided around the anode current collector 1. Regarding the insulating material, any material which does not have electron conduction can be used. In FIG. 3C, a solid electrolyte layer 2 is disposed around the anode current collector 1. In other words, the anode current collector 1 is disposed so as to be embedded in the solid electrolyte layer 2.

In FIG. 4A, a short circuit preventing region 11 formed from an insulation-treated section is provided on the surface on the side of the solid electrolyte layer 2 (position corresponding to the outer periphery of the solid electrolyte layer 2) of the anode current collector 1. In this case, the outer periphery of the anode current collector 1 is at the position denoted as α. In FIG. 4B, a hollow-shaped member is used as a battery case 6. This hollow-shaped member may be the molding tool used when the solid electrolyte layer 2 is formed. A short circuit preventing region 11 formed from an insulating material different from the solid electrolyte layer 2 is provided around the anode current collector 1; however, the short circuit preventing region 11 may also be configured to include an inert gas as shown in FIG. 3A. In FIG. 4C, the battery case 6 also functions as the anode current collector 1 and the cathode current collector 4. As such, the battery case may also function as at least one of the anode current collector and the cathode current collector.

The solid state lithium secondary battery may have a charge control unit that controls the current density at the time of charging. The current density at the time of charging is not particularly limited as long as it is a current density at which a short circuit does not occur; however, the current density at the time of charging is, for example, 0.026 mA/cm² or more, preferably 0.26 mA/cm² or more, and more preferably 2.6 mA/cm² or more. On the other hand, the current density at the time of charging is, for example, 52 mA/cm² or less, preferably 10.4 mA/cm² or less, and more preferably 5.2 mA/cm² or less.

The solid state lithium secondary battery may be imparted with a confining pressure in the thickness direction, by a restraint member. The kind of the restraint member is not particularly limited, and any general restraint member can be used. The confining pressure (planar pressure) is not particularly limited; however, the confining pressure is, for example, 0.1 MPa or more, and preferably 1 MPa or more. When the confining pressure is increased, it is advantageous in that the contact between particles, such as the contact between the active material particles and the electrolyte particles, can be easily maintained. On the other hand, the confining pressure (planar pressure) is, for example, 100 MPa or less, and preferably 50 MPa or less. It is because if the confining pressure is too large, the restraint member may be requested to have high rigidity, and there is a possibility that the size of the restraint member may be increased.

The use of the solid state lithium secondary battery is not particularly limited, but the battery is useful as, for example, a battery for vehicles. Examples of the shape of the solid state lithium secondary battery include a coin shape, a laminate shape, a cylindrical shape, and a rectangular shape.

### 2. Second embodiment

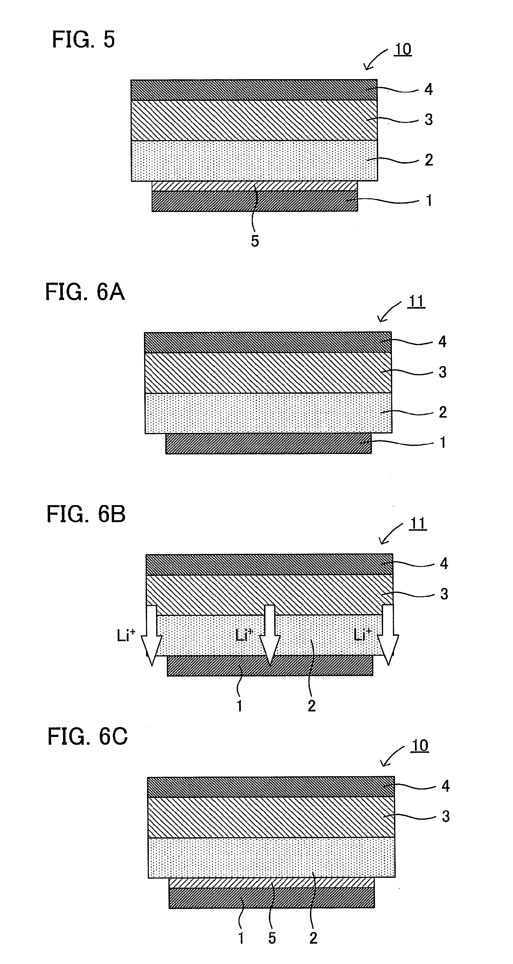

FIG. 5 is an outline cross-sectional diagram illustrating an example of the solid state lithium secondary battery of the second embodiment. As shown in FIG. 5, the solid state lithium secondary battery 10 of the second embodiment comprises an anode current collector 1, a solid electrolyte layer 2, a cathode active material layer 3, and a cathode current collector 4 in this order.

Furthermore, the solid state lithium secondary battery comprises an anode active material layer 5 composed of precipitated Li metal on the side of the solid electrolyte layer 2 of the anode current collector 1. Incidentally, other features are the same as the matters described in the first embodiment given above.

Here, whether Li metal has been precipitated on the surface of the anode current collector can be checked by observing the interface between the two. For the observation of the interface, for example, field emission type scanning electron microscopy (FE-SEM) can be used. For example, in a case where Li metal has been disposed in advance, the Li metal exists uniformly in a dense state. On the other hand, in a case where Li metal has been precipitated, the Li metal exists in a slightly sparse state, in relative conformity with the electrolyte. Furthermore, the surface of the precipitated Li metal is occasionally in a fibrous state (diameter about 100 nm).

According to the second embodiment, since the outer periphery of the anode current collector is formed inwardly of the outer periphery of the solid electrolyte layer, and the distance between the two is larger than or equal to a predetermined value, a solid state lithium secondary battery in which the occurrence of a short circuit at the time of charging is suppressed, can be obtained.

The thickness of the Li metal precipitated on the surface of the anode current collector is not particularly limited; however, the thickness is usually sufficiently smaller than the value of the distance D. Furthermore, the thickness of the Li metal also varies depending on the state of charge. The maximum thickness of the Li metal is, for example, 50 µm or less, preferably 30 µm or less, and more preferably 20 µm or less. Incidentally, the maximum thickness of the Li metal calculated as an average thickness in a state in which charging has proceeded to the maximum.

Furthermore, according to the second embodiment, the Li metal precipitated at the time of charging is utilized as the anode active material. Therefore, the amount of Li in the entire battery is usually consistent with the amount of Li of the cathode active material layer and the solid electrolyte layer. Furthermore, in a case where an electrochemical oxidation-reduction decomposition reaction or the like does not occur in the solid electrolyte layer, since the amount of Li of the solid electrolyte layer is constant, the amount of Li decreased from the cathode active material layer at the time of charging is consistent with the amount of Li precipitated on the anode current collector at the time of charging. Furthermore, there are occasions in which when charging has been achieved completely, the cathode active material does not contain Li.

Other matters in the second embodiment are the same as the matters described in the first embodiment given above, and therefore, further description will not be repeated herein. Also, the solid state lithium secondary battery of the second embodiment corresponds to a state in which the solid state lithium secondary battery of the first embodiment has been subjected to charging.

### B. Method for producing solid state lithium secondary battery

FIGS. 6A to 6C are outline cross-sectional diagrams illustrating an example of the method for producing a solid state lithium secondary battery of the invention. First, a laminate 11 including an anode current collector 1, a solid electrolyte layer 2, a cathode active material layer 3, and a cathode current collector 4 in this order is prepared (FIG. 6A). Usually, the solid electrolyte layer 2 is disposed on the surface of the anode current collector 1, and the two are in contact. When the laminate 11 is produced, at least the solid electrolyte layer 2 is formed by a pressurization treatment. Next, the laminate 11 is subjected to a charging treatment, and thus Li contained in the cathode active material layer 3 is caused to migrate toward the anode current collector 1 side (FIG. 6B). Thereby, Li metal (anode active material layer 5) is precipitated on the surface of the anode current collector 1 (FIG. 6C). Incidentally, other features are the same as the matters described in the above section "A. Solid state lithium secondary battery".

According to the present invention, since the outer periphery of the anode current collector is formed inwardly of the outer periphery of the solid electrolyte layer, and the distance between the two is larger than or equal to a predetermined value, a solid state lithium secondary battery in which the occurrence of a short circuit at the time of charging is suppressed, can be obtained.

Hereinafter, the various steps of the method for producing a solid state lithium secondary battery of the present invention will be described.

### 1. Preparation step

The preparation step according to the present invention is a step of preparing a laminate including an anode current collector, a solid electrolyte layer, a cathode active material layer, and a cathode current collector in this order.

In regard to the members that constitute the laminate, the matters are the same as the matters described in the above section "A. Solid state lithium secondary battery", and therefore, further description will not be repeated herein. Furthermore, the method for producing a laminate is not particularly limited as long as the method is a method of forming at least a solid electrolyte layer by a pressurization treatment. Through the pressurization treatment described above, plastic deformation of the sulfide solid electrolyte particles usually occurs. Furthermore, when the solid electrolyte layer is formed, it is preferable to use a molding tool (for example, a mold). That is, it is preferable to form a solid electrolyte layer by introducing a material for forming a solid electrolyte layer including sulfide solid electrolyte particles into a molding tool, and performing a pressurization treatment using a pressurizing tool. The material for forming a solid electrolyte layer may be in a powder form, or may be in a layered form. The layered material for forming a solid electrolyte layer can be obtained by, for example, applying a material for forming a solid electrolyte layer in a slurry form on a substrate, and then drying the slurry. An anode current collector may be disposed on the surface from which the substrate has been detached. Also, the molding tool may be in a hollow shape, or may have depressions. Furthermore, the molding tool may be used as the battery case.

The maximum pressure applied to the solid electrolyte layer is, for example, 550 MPa or more, and is preferably 600 MPa or more, more preferably 650 MPa or more, even more preferably 700 MPa or more, and particularly preferably 750 MPa or more. On the other hand, the maximum pressure applied to the solid electrolyte layer is, for example, 1000 MPa or less, and preferably 800 MPa or less. If the pressure applied to the solid electrolyte layer is too large, there is a possibility that the size of the tool may be enlarged, or a defect such as a decrease in the battery performance caused by cracking in the solid electrolyte particles. Incidentally, the "maximum pressure applied to the solid electrolyte layer" denotes the highest pressure among the pressures applied in the step of producing a laminate, as well as the pressures applied to the solid electrolyte layer in the steps described below. Furthermore, the method of applying pressure in the invention is not particularly limited; however, examples thereof include flat plate pressing and roll pressing.

Any method can be employed as the method for producing the laminate. For example, only the material for forming a solid electrolyte layer may be subjected to a pressurization treatment, or the material for forming a solid electrolyte layer may be subjected to a pressurization treatment together with a portion or all of the materials for forming other members. Furthermore, the number of pressurization treatments carried out during the production of the laminate may be once, or may be several times.

### 2. Charging step

The charging step according to the present invention is a step of subjecting the laminate to a charging treatment.

The current density at the time of charging is not particularly limited as long as it is a current density at which short circuits do not occur; however, the current density is, for example, 0.026 mA/cm² or more, preferably 0.26 mA/cm² or more, and more preferably 2.6 mA/cm² or more. On the other hand, the current density at the time of charging is, for example, 52 mA/cm² or less, and is preferably 10.4 mA/cm² or less, and more preferably 5.2 mA/cm² or less.

According to the invention, a confining pressure (planar pressure) may be, or may not be, applied to the laminate at the time of charging. The confining pressure (planar pressure) is, for example, 0.1 MPa or more, and is preferably 1 MPa or more. When the confining pressure is increased, there is an advantage in that the contact between particles, such as the contact between the active material particles and the electrolyte particles, can be easily maintained. On the other hand, the confining pressure (planar pressure) is, for example, 100 MPa or less, and is preferably 50 MPa or less. This is because if the confining pressure is too large, the restraint member may be requested to have high rigidity, and there is a possibility that the size of the restraint member may be enlarged.

### 3. Solid state lithium secondary battery

In regard to the solid state lithium secondary battery obtainable by the present invention, the same matters as those of the above section "A. Solid state lithium secondary battery, 2. Second embodiment" apply, and therefore, further description will not be repeated herein.

Incidentally, the present invention is not intended to be limited to the embodiments described above. The embodiments described above are only for illustrative purposes, and any embodiment that has substantially the same configuration as the technical ideas described in the claims of the invention and provides a similar operating effect is included in the technical scope of the present invention.

### Examples

Hereinafter, the invention will be explained more specifically by way of Examples.

### [Example 1]

### (Production of sulfide solid electrolyte particles)

Lithium sulfide (Li₂S, purity 99.9%, manufactured by Nippon Chemical Industrial Co., Ltd.), diphosphorus pentasulfide (P₂S₅, purity 99%, manufactured by Sigma-Aldrich Co. LLC.), and lithium iodide (LiI, purity 99.9%, manufactured by Sigma-Aldrich Co. LLC.) were used as starting raw materials. Next, in a glove box in an Ar atmosphere (dew point to 70°C), Li₂S, P₂S₅ and LiI were mixed at a composition ratio of 20 LiI·80 (0.75 Li₂S·0.25 P₂S₅). Introduced into a vessel of a planetary ball mill (45 cc, made of ZrO₂) was 2 g of this mixture, dehydrated heptane (amount of moisture 30 ppm or less, 4 g) was introduced therein, and ZrO₂ balls (φ = 5 mm, 53 g) were introduced therein. The vessel was completely sealed (Ar atmosphere). This vessel was mounted in a planetary ball milling machine (P7™ manufactured by Fritsch Japan Co. , Ltd.), and mechanical milling was carried out at a speed of rotation of 500 rpm in 40 cycles, with one cycle including a one-hour treatment and a 15-minute rest. Subsequently, in order to remove heptane, drying was carried out under the conditions of 100°C and 1 hour. Thereby, a sulfide glass was obtained. Thereafter, the sulfide glass thus obtained was subjected to a heat treatment under the conditions of 180°C and 3 hours in an Ar atmosphere, and thereby the sulfide glass was crystallized. Thus, a glass ceramic (sulfide solid electrolyte particles) was obtained.

### (Production of cathode)

LiCoO₂ (manufactured by Nippon Chemical Industrial Co., Ltd., trade name: CELLSEED, average particle size D₅₀ = 10 µm) was prepared as a cathode active material. A coating layer composed of LiNbO₃ (average thickness 10 nm) was formed on the surface of the cathode active material using a tumbling flow coating apparatus (manufactured by Powrex Corp., MP01™).

The cathode active material thus obtained (LiCoO₂ coated with LiNbO₃) and the sulfide solid electrolyte particles (20LiI·80(0.75 Li₂S·0.25P₂S₅), glass ceramic, average particle size D₅₀ = 0.8 µm) were mixed at a weight ratio of cathode active material : sulfide solid electrolyte particles = 93 : 7. Subsequently, PVdF (binder) dissolved in butyl butyrate was added thereto, the mixture was mixed with an ultrasonic homogenizer, and thus a slurry for cathode was obtained. Subsequently, the slurry for cathode was applied on a carbon-coated aluminum (Al) foil (cathode current collector) with a doctor blade. The slurry for cathode was subjected to natural drying, followed by drying under the conditions of 100°C for 1 hour, and thus a cathode was obtained.

### (Production of sheet for forming solid electrolyte layer)

PVdF (binder) dissolved in butyl butyrate was added to the sulfide solid electrolyte particles (20LiI·80(0.75Li₂S·0.25P₂S₅), glass ceramic, average particle size D₅₀ = 0.8 µm), the mixture was mixed with an ultrasonic homogenizer, and thus a slurry for solid electrolyte layer was obtained. Subsequently, the slurry for a solid electrolyte layer was applied on an Al foil (substrate) with a doctor blade. The slurry for solid electrolyte layer was subjected to natural drying, followed by drying under the conditions of 100°C for 1 hour, and thus a sheet for forming a solid electrolyte layer was obtained.

### (Production of battery for evaluation)

In a cylinder (φ = 11.28 mm) made of MACOR, the cathode and the sheet for forming a solid electrolyte layer punched to have equal diameters were placed, and the members were pressure molded at 784 MPa using a piston having a diameter of 11.28 mm. Subsequently, the Al foil (substrate) was peeled off from the sheet for forming a solid electrolyte layer, a piston (anode current collector) made of SUS and having a tip diameter of 10 mm was disposed on the exposed solid electrolyte layer, and the piston was firmly joined to the solid electrolyte layer with three bolts. Thus, a battery for evaluation (torque = 2 Ncm, planar pressure = 15 MPa) was obtained. Thereafter, the battery for evaluation was placed in a glass vessel (Ar atmosphere), and the glass vessel was tightly sealed. Incidentally, the cathode active material, the solid electrolyte layer, and the anode current collector were disposed concentrically as illustrated in FIG. 1B. Furthermore, the weight of the cathode active material layer was 21.5 mg, the weight of the solid electrolyte layer was 3.2 mg, and the thickness of the solid electrolyte layer was 15 µm.

### [Comparative Example 1]

A battery for evaluation was obtained in the same manner as in Example 1, except that a piston having a diameter of 11.28 mm was used as the anode current collector.

### [Comparative Example 2]

A battery for evaluation was obtained in the same manner as in Comparative Example 1, except that the weight of the solid electrolyte layer was adjusted to 10.7 mg, and the thickness of the solid electrolyte layer was adjusted to 50 µm.

### [Evaluation]

### (Charge-discharge measurement)

Charge-discharge measurement was carried out using the batteries for evaluation obtained in Example 1 and Comparative Examples 1 and 2. The measurement conditions were set to 25°C, a potential range of 3.0 V to 4.2 V, a current density of 0.26 mA/cm², and constant current (CC) charge-discharge. When an internal short circuit occurs, charging is not terminated. Therefore, in that case, charging was terminated in 20 hours, and the battery was discharged. Incidentally, the presence or absence of an internal short circuit was determined from the presence or absence of a rapid decrease in voltage at the time of charging, the charging capacity, and the coulombic efficiency.

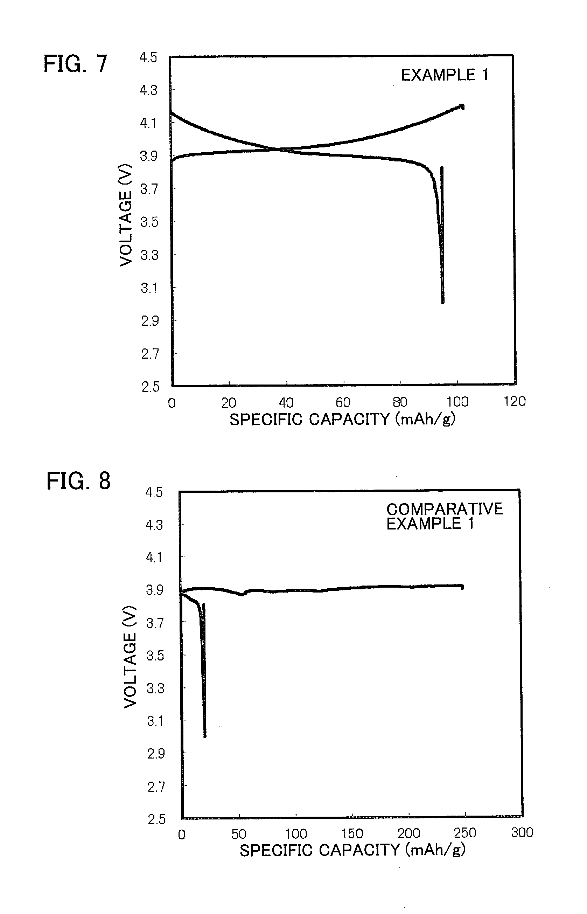

The results are presented in FIG. 7 to FIG. 9. As illustrated in FIG. 7 to FIG. 9, in Example 1, clear signs of an internal short circuit were not seen during charging, and charging up to 4.2 V was enabled. Furthermore, discharging up to 3.0 V was enabled. In contrast, in Comparative Example 1, a rapid decrease in voltage during charging was confirmed, and charging could not be achieved up to 4.2 V. Furthermore, the charging capacity became larger than 137 mAh/g, the theoretical capacity of LiCoO₂. This is speculated to be because an internal short circuit occurred, and an increase in voltage caused by charging was not normally achieved. Furthermore, the discharging capacity was also small. In Comparative Example 2, a rapid decrease in voltage during charging was not confirmed, but the charging capacity became larger than 137 mAh/g, the theoretical capacity of LiCoO₂. This is speculated to be because a minute internal short circuit occurred, and an increase in voltage caused by charging was not normally achieved.

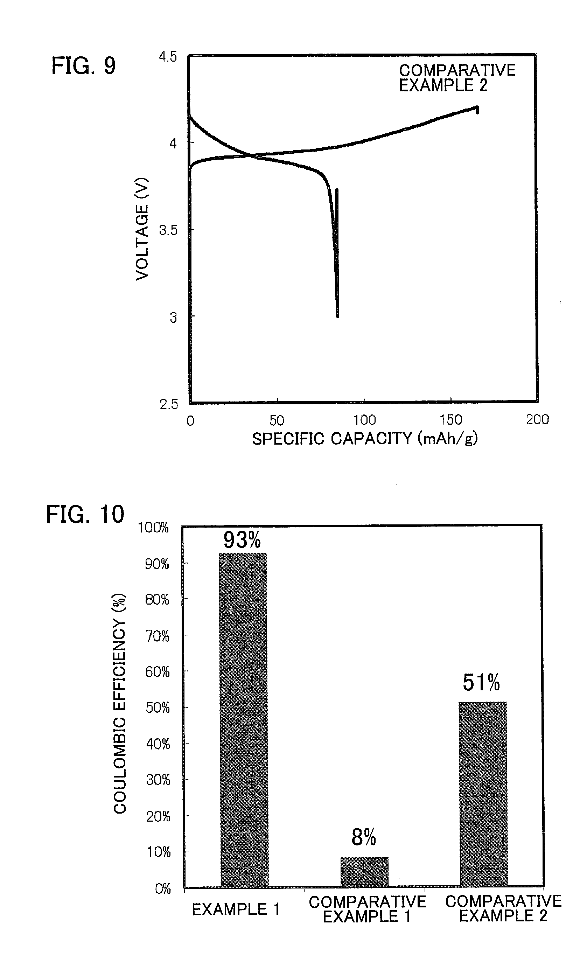

The results for the coulombic efficiency are presented in FIG. 10. As illustrated in FIG. 10, in Example 1, a coulombic efficiency as high as 93% was obtained, and it was confirmed that an internal short circuit did not occur. Incidentally, in Example 1, slight irreversibility was confirmed; however, this is speculated to be because a chemical reaction between the sulfide solid electrolyte particles and Li metal occurred, or because the battery lacked Li metal from an electrical viewpoint. In contrast, in Comparative Example 1, a very low coulombic efficiency of 8% was obtained. Incidentally, in Comparative Example 1, charging was terminated in 20 hours; however, if charging was carried out for 20 hours or longer, the coulombic efficiency would further be decreased. Furthermore, in Comparative Example 2, a low coulombic efficiency of 51% was obtained. It is speculated that in Comparative Examples 1 and 2, an internal short circuit occurred during charging, as described above.

As discussed above, it was confirmed that when the thickness of the solid electrolyte layer is 50 µm or less, an internal short circuit originating from the outer periphery of the solid electrolyte layer begins to be actualized; however, in that case, the occurrence of short circuits can be suppressed when the outer periphery of the anode current collector is formed inwardly of the outer periphery of the solid electrolyte layer.

### (SEM observation)

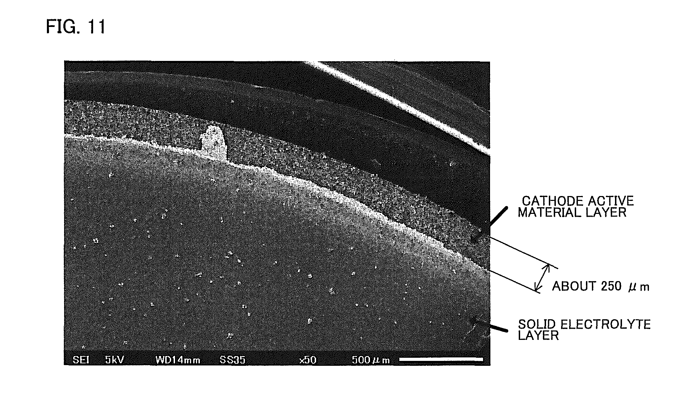

After the battery for evaluation of Comparative Example 1 was produced, the piston was detached, and the surface of the solid electrolyte layer was observed by SEM. The results are presented in FIG. 11. As illustrated in FIG. 11, the outer periphery of the solid electrolyte layer was peeled at a width of about 250 µm, and the cathode active material layer was exposed. Inferring from the mechanism, it is speculated that dendrites are generated in an area where the cathode active material layer is exposed (area where the solid electrolyte layer has been peeled off), or a bright area seen at the interface between the solid electrolyte layer and the cathode active material (area with many voids). As illustrated in FIG. 11, the distance of the area where the cathode active material layer is exposed is about 250 µm, and the distance including the area having many voids is about 300 µm. Therefore, when the distance D between the outer periphery of the solid electrolyte layer and the outer periphery of the anode current collector is 300 µm or more, the effect of the present invention is obtained. Furthermore, it was confirmed that with regard to the outer periphery of the solid electrolyte, in a case where the thickness of the solid electrolyte layer is small, a large number of voids are generated in the outer periphery and cause the generation of dendrites.

### Reference Signs List

- 1: anode current collector
- 1a: outer peripheral section of anode current collector
- 2: solid electrolyte layer
- 2a: outer peripheral section of solid electrolyte layer
- 3: cathode active material layer
- 4: cathode current collector
- 5: anode active material layer
- 6: battery case
- 10: solid state lithium secondary battery
- 11: short circuit preventing region

## Claims

1. A solid state lithium secondary battery comprising an anode current collector (1), a solid electrolyte layer (2), a cathode active material layer (3), and a cathode current collector (4) in this order,
**characterized in that** (i) the solid electrolyte layer (2) is provided on a surface of the anode current collector (1) or (ii) an anode active material layer (5) composed of precipitated Li metal is provided on a surface on the solid electrolyte layer side of the anode current collector (1),
the solid electrolyte layer (2) contains a sulfide solid electrolyte particle,
a thickness of the solid electrolyte layer (2) is 50 µm or less,
when viewed in a planar view, an outer periphery of the anode current collector (1) is formed inwardly of an outer periphery of the solid electrolyte layer (2), and
a distance (D) between the outer periphery of the solid electrolyte layer (2) and the outer periphery of the anode current collector (1) is 300 µm or more.

2. The solid state lithium secondary battery according to claim 1, **characterized in that** the distance (D) between the outer periphery of the solid electrolyte layer (2) and the outer periphery of the anode current collector (1) is 640 µm or more.

3. A method for producing a solid state lithium secondary battery, comprising steps of:
a preparation step of preparing a laminate including an anode current collector (1), a solid electrolyte layer (2), a cathode active material layer (3), and a cathode current collector (4) in this order; and
a charging step of subjecting the laminate to a charging treatment,
**characterized in that** in the preparation step, at least the solid electrolyte layer (2) is formed by a pressurization treatment,
in the charging step, an anode active material layer (5) composed of precipitated Li metal is formed on a surface on the solid electrolyte layer side of the anode current collector (1) by causing Li contained in the cathode active material layer to migrate toward the anode current collector,
the solid electrolyte layer (2) contains a sulfide solid electrolyte particle,
a thickness of the solid electrolyte layer (2) is 50 µm or less,
when viewed in a planar view, an outer periphery of the anode current collector (1) is formed inwardly of an outer periphery of the solid electrolyte layer (2), and
a distance (D) between the outer periphery of the solid electrolyte layer (2) and the outer periphery of the anode current collector (1) is 300 µm or more.
